# EUROPÄISCHE PATENTSCHRIFT

(11) **EP 1 234 397 B1**
(45) Veröffentlichungstag und Bekanntmachung des Hinweises auf die Patenterteilung: **20.10.2004**
(21) Anmeldenummer: 00989821.4
(22) Anmeldetag: 01.12.2000
(51) Int. Cl.: H04J 13/00, H04L 1/00, H04B 7/26

(54) **DATENÜBERTRAGUNG IN EINEM KOMMUNIKATIONSSYSTEM**
DATA TRANSMISSION IN A COMMUNICATIONS SYSTEM
TRANSMISSION DE DONNEES DANS UN SYSTEME DE COMMUNICATION

(30) Priorität: 03.12.1999 DE 19958425
(43) Veröffentlichungstag der Anmeldung: 28.08.2002
(73) Patentinhaber: SIEMENS AKTIENGESELLSCHAFT, 80333 München (DE)
(72) Erfinder: LEHMANN, Gerald, 12101 Berlin (DE); RAAF, Bernhard, 81475 München (DE); SOMMER, Volker, 13503 Berlin (DE)
(86) Internationale Anmeldenummer: PCT/DE2000/004288
(87) Internationale Veröffentlichungsnummer: WO 2001/041342

(56) Entgegenhaltungen:
- EP-A- 0 918 410
- WO-A-99/01994
- ADACHI F ET AL: "COHERENT MULTICODE DS-CDMA MOBILE RADIO ACCESS" IEICE TRANSACTIONS ON COMMUNICATIONS,JP,INSTITUTE OF ELECTRONICS INFORMATION AND COMM. ENG. TOKYO, Bd. E79B, Nr. 9, 1. September 1996 (1996-09-01), Seiten 1316-1324, XP000636071 ISSN: 0916-8516
- DOHI T ET AL: "EXPERIMENTS ON COHERENT MULTICODES DS-CDMA" IEICE TRANSACTIONS ON COMMUNICATIONS,JP,INSTITUTE OF ELECTRONICS INFORMATION AND COMM. ENG. TOKYO, Bd. E79B, Nr. 9, 1. September 1996 (1996-09-01), Seiten 1326-1331, XP000636072 ISSN: 0916-8516

## Beschreibung

In einem CDMA-(Code Division Multiple Access-)Mobilfunksystem wird die zur Verfügung stehende Übertragungskapazität durch Verwendung von Spreizcodes aufgeteilt. Diese Aufteilung ermöglicht die Trennung der Teilnehmer und stellt jeden Teilnehmer eine Teilkapazität, d.h. einen physikalischen Kanal bereit. Die Kapazität eines physikalischen Kanals ist meist so dimensioniert, daß eine für einen Standardservice, wie z.B. einen Sprachservice, ausreichende Übertragungsrate zur Verfügung gestellt wird. Wird aber eine höhere Übetragungsrate für einen Teilnehmer gefordert, so können diesem Teilnehmer mehrere physikalische Kanäle zur Verfügung gestellt werden. Dies kann durch die Zuteilung von mehreren Spreizcodes für den Teilnehmer erreicht werden.

Die auf die physikalischen Kanäle zu verteilenden Datenströme können zum Fehlerschutz auf der Übertragungsstrecke kodiert (FEC = forward error correction) und zeitlich verschachtelt sein (Interleaving). Das Interleaving bewirkt, daß zu erwartende Bündelfehler durch Störungen auf der Übertragungsstrecke nach dem empfängerseitigen De-Interleaving zeitlich gleichmäßig verteilt werden, um Bündelfehler am Eingang des Decoders zur Fehlerkorrektur zu vermeiden.

Die Verteilung der zu übertragenden und zeitlich verschachtelten Daten auf mehrere Codes kann bewirken, daß der durch das Interleaving gewonnene zeitliche Abstand zwischen ursprünglich (vor dem Interleaving) benachbarten Datenbits während der Übertragung wieder reduziert wird, da die Übertragung in den einzelnen Kanälen zeitlich parallel erfolgt.

Beispielsweise ist es möglich, die Bits so auf die unterschiedlichen Kanäle zu verteilen, daß die ersten N Bits dem ersten CDMA-Kanal zugeordnet werden, die nächsten N Bits dem zweiten Kanal usw., wobei N die Kapazität jedes physikalischen Kanals ist. Dies kann zu der zuvor beschriebenen Verringerung des eigentlich durch das Interleaving bezweckten zeitlichen Abstandes der zu übertragenden Daten führen, d.h. die zuvor vorgenommene zeitliche Verschachtelung wird durch die Aufteilung auf mehrere CDMA-Kanäle u.U. teilweise kompensiert bzw. rückgängig gemacht.

In Adachi et al "Coherent Multicode DS-CDMA Mobile Radio Access", in IEICE Transactions On Communications, Band E79B, 1. September 1996, Seiten 1316- 1324 ist ein Verfahren zum Übertragen von Datenbits in einem DS-(Direct Sequence)CDMA-Mobilfunksystem beschrieben. Bei diesem werden einer Kommunikationsverbindung mehrere Übertragungskanäle zugeordnet, denen jeweils ein individueller Spreizcode zugeordnet ist. Die den einzelnen Spreizcodekanälen zugeordneten Bits werden durch einen Modulator in Symbole umgewandelt, die anschließend mit dem Spreizcode des jeweiligen Kanals gespreizt werden. Andere Mobilfunksysteme, bei denen ebenfalls einer Kommunikationsverbindung mehrere Spreizcodes zugeordnet sind, sind der WO 99/01994 A, der EP 0 918 410 A sowie Dohi et al: "Experiments On Coherent Multicodes DS-CDMA", in: IEICE Transactions On Communications, Band E79B, Nr. 9, 1. September 1996, Seiten 1326-1331 zu entnehmen. Keinem der genannten Dokumente ist ein Zusammenhang zwischen der Anzahl der jeweils zu einem Zeitpunkt jedem Spreizcodekanal zugeteilten Bits und der Anzahl der jeweils zu einem Modulationssymbol zusammengefassten Bits zu entnehmen.

Der Erfindung liegt die Aufgabe zugrunde, ein Verfahren zum Senden von einer Kommunikationsverbindung zugeordneten Datenbits anzugeben, das eine flexible Anpassung an ein möglicherweise durchzuführendes Interleaving der Datenbits erlaubt.

Diese Aufgabe wird mit einem Verfahren gemäß Anspruch 1 gelöst. Vorteilhafte Aus- und Weiterbildungen der Erfindung sind Gegenstand der abhängigen Ansprüche.

Das Verfahren zum Senden von einer Kommunikationsverbindung zugeordneten, sequentiell vorliegenden Datenbits in einem Kommunikationssystem, in dem nach einem CDMA-Verfahren separierte Übertragungskanäle zur Verfügung stehen, denen jeweils ein individueller Spreizcode zugeordnet ist, sieht folgende Schritte vor:
- der Kommunikationsverbindung werden C ≥ 2 der Übertragungskanäle zugeordnet,
- jeweils N≥1 aufeinander folgende der Bits werden zu Bitgruppen zusammengefaßt,
- jedem übertragungskanal werden mehrere der Bitgruppen so zugeordnet, daß vor der Zuordnung einander benachbarte Bitgruppen nach der Zuordnung unterschiedlichen der Übertragungskanäle zugeordnet sind,
- für jeden übertragungskanal werden jeweils M ≥ 1 aufeinander folgende der Bits der ihm zugeteilten Bitgruppen zu Symbolen zusammengefaßt, wobei M ≥ N,
- die Symbole werden mit dem Spreizcode des jeweiligen Kanals gespreizt
- und die gespreizten Symbole werden gesendet.

Durch das erfindungsgemäße Verfahren können die Bits bzw. Bitgruppen für die Übertragung über die CDMA-Kanäle, also mittels unterschiedlicher Spreizcodes, in eine Reihenfolge gebracht werden, die flexibel an die Erfordernisse eines gewünschten Interleaving-Algorithmus angepaßt werden kann. Die hohe Flexiblität ist durch die Zuordnung der einzelnen Bitgruppen zu den Kanälen bedingt, wobei durch die Beschränkung der Bits pro Bitgruppe auf eine Anzahl, die höchstens gleich der Anzahl von Bits ist, die in einem nachfolgenden Verfahrensschritt jedem Symbol zugeordnet werden, erreicht wird, dass eine möglichst geringe Beeinträchtigung des Ergebnisses des Interleavings erreicht wird.

Es ist möglich, dass den Symbolen jeweils nur ein Bit zugeordnet wird. Weiterhin ist es möglich, dass jeder Bitgruppe nur ein Bit zugeordnet wird.

Nach einer vorteilhaften Weiterbildung der Erfindung ist vorgesehen, dass
- für die Zuordnung der Bitgruppen zu den Übertragungskanälen die C ersten der aufeinander folgenden Bitgruppen jeweils einem der C Übertragungskanäle zugeteilt werden
- und der vorhergehende Verfahrensschritt mit den jeweils nächstfolgenden der Bitgruppen solange wiederholt wird, bis alle Bitgruppen aufgeteilt sind.

Diese Weiterbildung hat folgende Vorteile:
- Es erfolgt nur eine relativ geringe Reduzierung des durch ein eventuell zuvor durchgeführtes Interleaving bewirkten zeitlichen Abstandes ursprünglich benachbarter Bits während der Übertragung mittels mehrerer CDMA-Kanäle.
- Das Verfahren ist einfach, effizient und unabhängig vom eventuell zuvor eingesetzten Interleaving-Verfahren sowie von der Anzahl der für die Übertragung verwendeten Spreizcodes bzw. CDMA-Kanäle.

Im folgenden wird die Erfindung anhand der in den Figuren dargestellten Ausführungsbeispiele näher erläutert. Es zeigen:
- FIG 1: ein Blockschaltbild eines Funk-Kommunikationssystems, insbesondere eines Mobilfunksystems,
- FIG 2: eine beispielhafte schematische Darstellung der Rahmenstruktur der Funkschnittstelle und des Aufbaus eines Funkblocks,
- FIG 3: ein Blockschaltbild einer Sendeeinrichtung und
- FIG 4: die Zuordnung von Bitgruppen einer Verbindung zu mehreren Übertragungskanälen.

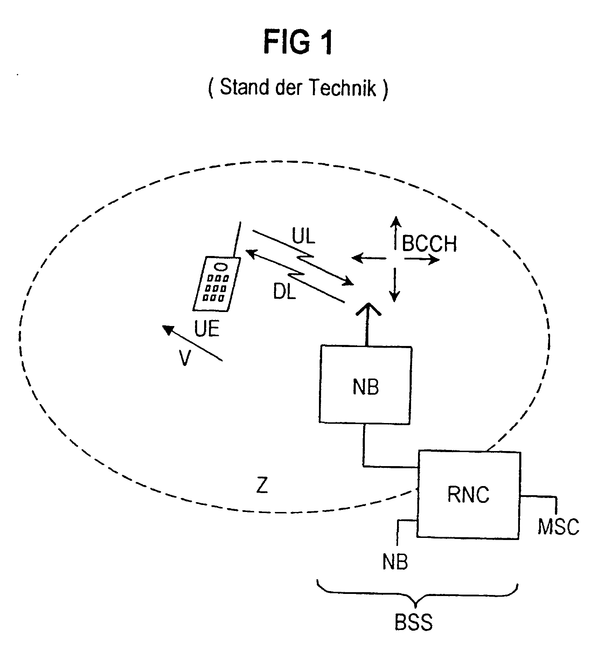

Die FIG 1 zeigt einen Teil eines Mobilfunksystems als Beispiel für die Struktur eines Funk-Kommunikationssystems. Ein Mobilfunksystem besteht jeweils aus einer Vielzahl von Mobilvermittlungsstellen MSC (Mobile Switching Center), die zu einem Vermittlungsnetz (Switching Subsystem) gehören und untereinander vernetzt sind bzw. den Zugang zu einem Festnetz PSTN herstellen, und aus jeweils einem oder mehreren mit diesen Mobilvermittlungsstellen MSC verbundenen Basisstationssystemen BSS (Base Station Subsystem). Ein Basisstationssystem BSS weist wiederum zumindest eine Einrichtung RNC (Radio Network Controller) zum Zuweisen von funktechnischen Ressourcen sowie zumindest eine jeweils damit verbundene Basisstation NB (Node B) auf.

Eine Basisstation NB kann über eine Funkschnittstelle Verbindungen zu Teilnehmerstationen UE (User Equipment) aufbauen und unterhalten. Durch jede Basisstation NB wird zumindest eine Funkzelle Z gebildet. Die Größe der Funkzelle Z wird in der Regel durch die Reichweite eines Organisationskanals (BCCH - Broadcast Control Channel), der von den Basisstationen NB mit einer jeweils höheren und konstanten Sendeleistung gesendet wird, bestimmt. Bei einer Sektorisierung oder bei hierarchischen Zellstrukturen können pro Basisstation NB auch mehrere Funkzellen Z versorgt werden.

Das Beispiel der FIG 1 zeigt eine Teilnehmerstation UE, die sich in der Funkzelle Z einer Basisstation NB befindet und sich mit einer Geschwindigkeit V bewegt. Die Teilnehmerstation UE hat eine Kommunikationsverbindung zu der Basisstation NB aufgebaut, auf der in Aufwärts- UL und Abwärtsrichtung DL eine Signalübertragung eines gewählten Dienstes erfolgt. Die Kommunikationsverbindung wird durch einen oder mehrere der Teilnehmerstation UE zugeteilte Spreizkodes von parallel in der Funkzelle Z aufgebauten Kommunikationsverbindungen separiert, wobei die Teilnehmerstation UE beispielsweise alle jeweils aktuell in der Funkzelle Z zugeteilten Spreizkodes für den Empfang der Signale der eigenen Kommunikationsverbindung gemäß dem bekannten Joint-Detection-Verfahren nutzt.

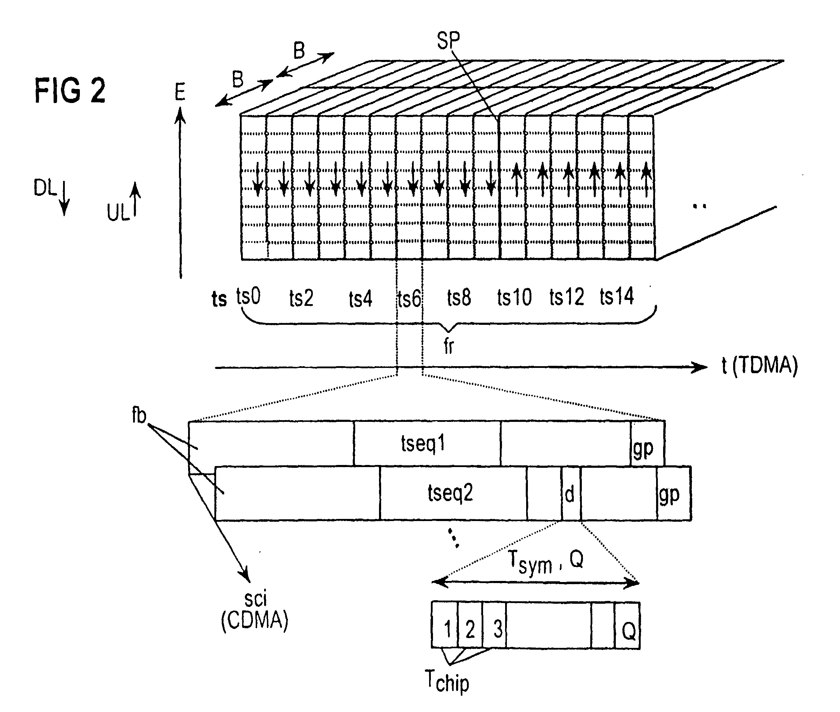

Eine beispielhafte Rahmenstruktur der Funkschnittstelle, wie sie in dem TDD-Modus des zukünftigen Mobilfunksystem der dritten Generation UMTS (Universal Mobile Telecommunications System) sowie in abgewandelter Form in dem zukünftigen chinesischen TD-SCDMA-Mobilfunksystem verwirklicht wird, ist aus der FIG 2 ersichtlich. Gemäß einer TDMA-Komponente ist eine Aufteilung eines breitbandigen Frequenzbandes, beispielsweise der Bandbreite B = 5 MHz, in mehrere Zeitschlitze ts, beispielsweise 16 Zeitschlitze ts0 bis ts15 vorgesehen. Jeder Zeitschlitz ts innerhalb des Frequenzbandes B bildet einen Frequenzkanal. Innerhalb eines breitbandigen Frequenzbandes B werden die aufeinanderfolgenden Zeitschlitze ts nach einer Rahmenstruktur gegliedert. So werden 16 Zeitschlitze ts0 bis ts15 zu einem Zeitrahmen fr zusammengefaßt. Mehrere nachfolgende Zeitrahmen fr ergeben einen Mehrfachrahmen.

Bei einer Nutzung eines TDD-Übertragungsverfahrens wird ein Teil der Zeitschlitze ts0 bis ts15 in Aufwärtsrichtung UL und ein Teil der Zeitschlitze ts0 bis ts15 in Abwärtsrichtung DL genutzt, wobei die Übertragung in Aufwärtsrichtung UL beispielsweise vor der Übertragung in Abwärtsrichtung DL erfolgt. Dazwischen liegt ein Umschaltzeitpunkt SP (SP - Switching Point), der entsprechend dem jeweiligen Bedarf an Übertragungskanälen für die Auf- und Abwärtsrichtung flexibel positioniert werden kann. Durch die variable Zuordnung der zeitschlitze ts für Auf- oder Abwärtsrichtung UL, DL können vielfältige asymmetrische Ressourcenzuteilungen vorgenommen werden.

Innerhalb der Zeitschlitze ts werden Informationen mehrerer Verbindungen in Funkblöcken fb übertragen. Die Daten d sind verbindungsindividuell mit einer Feinstruktur, einem Spreizkode SCi, gespreizt, so daß empfangsseitig eine Anzahl von Verbindungen durch diese CDMA-Komponente (code division multiple access) separierbar sind. Aus der Kombination aus einem Frequenzkanal und einem Spreizkode SCi wird ein Übertragungskanal definiert, der für die Übertragung von Signalisierungs- und Nutzinformationen genutzt werden kann. Die Spreizung von einzelnen Symbolen der Daten d bewirkt, daß innerhalb der Symboldauer T_{sym} Q Chips der Dauer T_{chip} übertragen werden. Die Q Chips bilden dabei den verbindungsindividuellen Spreizkode SCi. In den Funkblöcken fb ist weiterhin eine in der Regel verbindungsindividuelle Trainingssequenz tseq1... angeordnet, die einer empfangsseitigen Kanalschätzung dient. Weiterhin ist innerhalb des Zeitschlitzes ts eine Schutzzeit gp zur Kompensation unterschied licher Signallaufzeiten der Verbindungen aufeinanderfolgender Zeitschlitze ts vorgesehen.

Die nachfolgend beschriebenen Beispiele zur Erläuterung des erfindungsgemäßen Verfahren sind nicht auf die beispielhaft angegebene Funkschnittstellenstruktur gemäß der FIG 2 beschränkt. In gleicher Weise kann das Verfahren vorteilhaft in dem bereits erwähnten chinesischen TD-SCDMA-Mobilfunksystem (Time Division Synchronised Code Division Multiple Access), bei dem die Signalübertragung in Aufwärtsrichtung UL synchronisiert erfolgt, und dessen Struktur der Funkschnittstelle in einigen Punkten von dem erläuterten TDD-Modus des UMTS-Systems abweicht, verwirklicht werden. Weiterhin ist eine Anwendung der Erfindung in FDD-(Fequency Division Duplex-) Systemen möglich.

Das hier vorgeschlagene Verfahren sieht vor, daß einer Teilnehmer- bzw. Kommunikationsverbindung mehrere Spreizcodes SCi zugeteilt werden, um eine hohe Datenrate für einen Datendienst zu erhalten. Hierzu muß eine Aufteilung des beispeilsweise in Abwärtsrichtung gerichteten Datenstroms der Verbindung auf die den Spreizcodes zugeordneten Übertragungskanäle erfolgen.

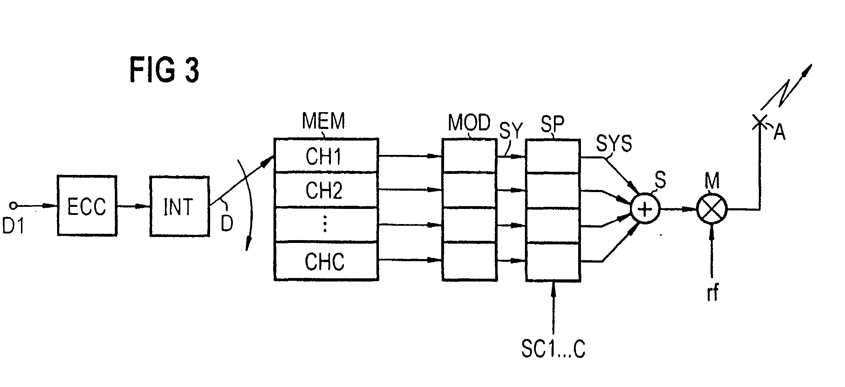

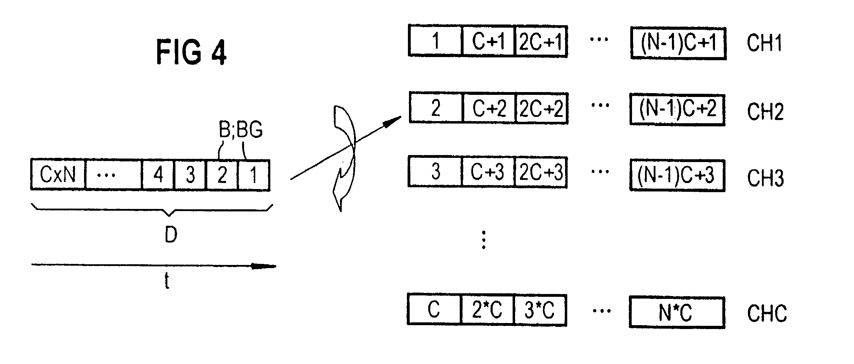

Figur 3 zeigt eine grobe Übersicht über die Verarbeitung von zu übertragenden Bits eines digitalen Datenstroms D1 in einer Teilnehmerstation des Mobilfunksystems. In der Figur 3 nicht dargestellt sind Einheiten, die auch bei herkömmlichen Sendeeinrichtungen von Mobilfunksystemen zum Einsatz kommen und daher dem Fachmann bekannt sind. Die zu übertragenden Daten D1 werden in einer Fehlercodiereinheit ECC mit einem Fehlerkorrekturcode codiert. Anschließend werden sie in einem Interleaver INT verschachtelt. An seinem Ausgang liefert der Interleaver INT einen Datenstrom D mit verschachtelten Datenbits, die einer Speichereinheit MEM zugeführt werden. Die Speichereinheit MEM ist in C Teilbereiche unterteilt, die jeweils zum Speichern von mehreren der Bits des verschachtelten Datenstroms D dienen und jeweils einem CDMA-Kanal CHi zugeordnet sind. Jedem der Kanäle CHi ist ein individueller Spreizcode zugeordnet. Auf die Zuordnung der Bits des Datenstroms D zu den Übertragungskanälen CHi wird noch anhand der Figur 4 weiter unten eingegangen.

Die in der Speichereinheit MEM jedem Kanal CHi zugeordneten Bits werden von dort parallel weiteren Verarbeitungsschritten zugeführt. Zunächst erfolgt eine Modulation durch Modulatoren MOD, die an ihren Ausgängen Symbole SY ausgibt, zu denen sie jeweils mehrere der Bits zusammengefaßt haben. Die Anzahl der Bits, die jedem Symbol zugeordnet werden, ist abhängig vom Modulationsverfahren. Beim QPSK (quaternary phase shift keying) werden beispielsweise jeweils 2 Bits jedem Symbol zugeordnet.

Die Symbole SY werden Spreizeinheiten SP zugeführt, die eine Spreizung der Symbole mit dem dem jeweiligen Kanal CHi zugehörigen Spreizcode SCi vornimmt. Die gespreizten Symbole werden anschließend durch eine Summation S überlagert und auf eine hochfrequente Trägerschwingung aufmoduliert. Abschließend erfolgt eine Übertragung über eine Antenne A.

Anhand Figur 4 wird nun die bereits bezüglich Figur 3 erwähnte Zuordnung der Bits B des verschachtelten Datenstroms D zu den CDMA-Ubertragungskanälen CHi erklärt. Der Datenstrom D, der innerhalb eines Funkblockes (Bursts) durch die Sendeeinrichtung übertragen werden soll, enthält CxN Bits B. Die Bits B wurden in Figur 4 durchnummeriert. Das zeitlich erste Bit des Datenstroms D hat die Nummer 1 usw.

Die Bits B des Datenstroms D werden so auf die Kanäle CHi verteilt, daß das erste Bit 1 dem ersten Kanal CH1 zugeordnet wird, das zweite Bit 2 dem zweiten Kanal CH2 usw. Nachdem jedem Kanal CHi jeweils ein Bit B zugeordnet worden ist, wird wieder mit dem ersten Kanal CH1 begonnen (Bits C+1 bis 2C), bis alle Bits B aufgeteilt worden sind. Es erfolgt also sozusagen eine "bitweise" Aufteilung des Datenstroms D auf die verschiedenen Kanäle CHi. Die Bits B werden anschließend in der im rechten Teil der Figur 4 gezeigten Reihenfolge den Modulatoren MOD aus Figur 3 zugeführt. Für den ersten Kanal CH1 ist dies beispielsweise die Reihenfolge 1, C+1, 2C+1,..., (n-1)C+1.

Dieses Verfahren bewirkt, daß die Bits B, die durch den Interleaver INT in die in der Figur 4 gezeigt Reihenfolge des Datenstroms D gebracht wurden, nahezu in dieser zeitlichen Reihenfolge übertragen werden. Sie werden auch weiterhin gleichzeitig oder direkt nacheinander übertragen, da die Daten aller Kanäle CHi gleichzeitig in Form von Funkblöcken übertragen werden. Dadurch werden die Bits 1 bis C praktisch gleichzeitig übertragen, ebenso die Bits C+1 bis 2C usw. Die Übertragung der Bits 1 bis C und diejenige der Bits C+1 bis 2C erfolgt in großer zeitlicher Nähe. Somit erfolgt nur eine minimale "Kompensation" des durch das Interleaving bezweckten Verschachtelung. Das beschriebene Verfahren ist unabhängig vom zuvor durchgeführten Interleaving. Dieses muß also nicht an die Anzahl der für die jeweilige Verbindung verwendeten CDMA-Kanäle CHi angepasst werden.

Der gleiche Effekt wird auch erzielt, wenn man anstelle von jeweils 1 Bit B, wie soeben anhand Figur 4 beschrieben, jeweils Gruppen mehrerer Bits bei jedem Zuordnungschritt einem der Kanäle CHi zuordnet. In Abwandlung der soeben erfolgten Beschreibung der Figur 4 handelt es sich dann bei den mit 1 bis CxN durchnummerierten Elementen nicht um einzelne Bits B, sondern um Bitgruppen BG, zu jeweils denen mehrere Bits B zusammengefaßt sind. Man erzielt das gleiche Ergebnis wie bei der bitweisen Zuordnung, wenn die Anzahl der Bits B pro Bitgruppe BG einen Wert M nicht überschreitet, wobei M die Anzahl der jedem Modulationssymbol SY zugeordneten Bits B ist.

Ferner kann die Kapazität der einzelnen Kanäle CHi verschieden sein. Dann erfolgt zunächst weiterhin eine bitweise oder bitgruppenweise Zuordnung. Sobald die vorgesehene Kapazität eines CDMA-Kanals erreicht ist, wird dieser bei den folgenden Zuordnungen übersprungen.

Hierbei kann die Anzahl der Bits B pro Bitgruppe BG auch unterschiedlich sein. Dies ist insbesondere dann von Vorteil, wenn die Spreizcodes SCi derjenigen Kanäle CHi, denen die wenigstens zwei Bitgruppen BG zugeordnet werden, unterschiedliche Spreizfaktoren Q haben. Ein großer Spreizfaktor ermöglicht die Unterscheidung einer größeren Anzahl von Spreizcodes. Allerdings ist die Übertragungskapazität eines Kanals, der einen großen Spreizfaktor hat, geringer als diejenigen eines Kanals mit kleinem Spreizfaktor. Daher ist es günstig, wenn die Spreizfaktoren der Spreizcodes SCi derjenigen Kanäle CHi, denen die wenigstens zwei Bitgruppen BG zugeordnet werden, im umgekehrten Verhältnis zueinander stehen, wie die Anzahl der diesen Gruppen zugeordneten Bits B. Es kommt dann durch die Zuordnung der Bitgruppen BG zu den Kanälen CHi mit unterschiedlicher Kapazität zu einer gleichmäßigen Auslastung dieser Kanäle. Dem Kanal mit geringerer Kapazität werden Bitgruppen BG mit jeweils relativ wenigen Bits B und dem Kanal mit größerer Kapazität werden Bitgruppen mit jeweils relativ mehr Bits zugeordnet.

Sofern der verwendete Interleaving-Algorithmus des Interleavers INT es zuläßt, ist das vorgeschlagene Verfahren auch so durchführbar, daß vor einer Modulation für eine Teilmenge der Kanäle CHi die Reihenfolge der ihnen zugeordneten Bits umgekehrt wird, so dass diese Bits der Modulation in umgekehrter Reihenfolge zugeführt werden.

## Patentansprüche

1. Verfahren zum Senden von einer Kommunikationsverbindung zugeordneten, sequentiell vorliegenden Datenbits (B) in einem Kommunikationssystem, in dem nach einem CDMA-Verfahren separierte Übertragungskanäle (CHi) zur Verfügung stehen, denen jeweils ein individueller Spreizcode (SCi) zugeordnet ist,
wobei der Kommunikationsverbindung C ≥ 2 der Übertragungskanäle (CHi) zugeordnet werden,
**dadurch gekennzeichnet,**
- **dass** jeweils N ≥ 1 aufeinander folgende der Bits (B) zu Bitgruppen (BG) zusammengefaßt werden,
- **dass** jedem Übertragungskanal (CHi) mehrere der Bitgruppen (BG) so zugeordnet werden, daß vor der Zuordnung einander benachbarte Bitgruppen nach der Zuordnung unterschiedlichen der Übertragungskanäle zugeordnet sind,
- **dass** für jeden Übertragungskanal (CHi) jeweils M ≥ 1 aufeinander folgende der Bits (B) der ihm zugeteilten Bitgruppen (BG) zu Symbolen (SY) zusammengefaßt werden,
wobei M ≥ N,
- **dass** die Symbole (SY) mit dem Spreizcode (SCi) des jeweiligen Kanals gespreizt werden, und
- **dass** die gespreizten Symbole (SYS) gesendet werden.

2. Verfahren nach Anspruch 1 mit folgenden weiteren Schritten:
- für die Zuordnung der Bitgruppen (BG) zu den Übertragungskanälen (CHi) werden die C ersten der aufeinander folgenden Bitgruppen jeweils einem der C Übertragungskanäle zugeteilt
- und der vorhergehende Verfahrensschritt wird mit den jeweils nächstfolgenden der Bitgruppen (BG) solange wiederholt, bis alle Bitgruppen aufgeteilt sind.

3. Verfahren nach Anspruch 2,
bei dem, sobald eine vorgesehene Übertragungskapazität eines der Übertragungskanäle (CHi) erschöpft ist, die Zuteilung der bis dahin noch nicht verteilten Bitgruppen (BG) unter Auslassung dieses Übertragungskanals auf die übrigen Kanälen fortgesetzt wird.

4. Verfahren nach einem der vorstehenden Ansprüche,
bei dem die Symbole (SY) nach ihrer Spreizung in allen der Verbindung zugeordneten Übertragungskanälen (CHi) gleichzeitig gesendet werden.

5. Verfahren nach einem der vorstehenden Ansprüche,
bei dem die Datenbits (B) vor ihrer Zusammenfassung zu den Bitgruppen (BG) in eine verschachtelte Reihenfolge gebracht werden.

6. Verfahren nach Anspruch 5,
bei dem die Datenbits (B) vor dem Verschachteln einer Fehlerschutzcodierung (ECC) unterzogen werden.

7. Verfahren nach einem der vorstehenden Ansprüche,
bei dem jeder Bitgruppe (BG) die gleiche Anzahl von Bits (B) zugeordnet werden.

8. Verfahren nach einem der Ansprüche 1 bis 6,
bei dem wenigstens zweien der Bitgruppen (BG) eine unterschiedliche Anzahl von Bits (B) zugeordnet werden.

9. Verfahren nach Anspruch 8,
bei dem die Spreizcodes (SCi) derjenigen Kanäle (CHi), denen die wenigstens zwei Bitgruppen (BG) zugeordnet werden, unterschiedliche Spreizfaktoren (Q) haben.

10. Verfahren nach Anspruch 9,
bei dem die Spreizfaktoren der Spreizcodes (SCi) derjenigen Kanäle (CHi), denen die wenigstens zwei Bitgruppen (BG) zugeordnet werden, im umgekehrten Verhältnis zueinander stehen, wie die Anzahl der diesen Gruppen zugeordneten Bits (B).

11. Anwendung des Verfahrens nach einem der vorstehenden Ansprüche auf ein Mobilfunksystem.

12. Sendeeinrichtung zum Senden von einer Kommunikationsverbindung zugeordneten, sequentiell vorliegenden Datenbits (B) in einem Kommunikationssystem, in dem nach einem CDMA-Verfahren separierte Übertragungskanäle (CHi) zur Verfügung stehen, denen jeweils ein individueller Spreizcode (SCi) zugeordnet ist,
wobei der Kommunikationsverbindung C ≥ 2 der Übertragungskanäle (CHi) zugeordnet sind,
**dadurch gekennzeichnet,**
**dass** sie folgende Mittel umfasst:
- Mittel zum Zusammenfassen von jeweils N ≥ 1 aufeinander folgenden der Bits (B) zu Bitgruppen (BG),
- Mittel zum Zuordnen von mehreren der Bitgruppen (BG) zu jedem Übertragungskanal (CHi) so, daß vor der Zuordnung einander benachbarte Bitgruppen nach der Zuordnung unterschiedlichen der Übertragungskanäle zugeordnet sind,
- Mittel (MOD) zum Zusammenfassen für jeden Übertragungskanal (CHi) von jeweils M ≥ 1 aufeinander folgenden der Bits (B) der ihm zugeteilten Bitgruppen (BG) zu Symbolen (SY),
wobei M ≥ N,
- Mittel (SP) zum Spreizen der Symbole (SY) mit dem Spreizcode (SCi) des jeweiligen Kanals, und
- Mittel (A) zum Senden der gespreizten Symbole (SYS).

## Claims

1. Method for transmitting data bits (B), which are allocated to a communications connection and are present in a sequential manner, in a communications system in which transmission channels (CHi) separated using a CDMA method are available, to which channels an individual spreading code (SCi) is allocated in each case,
with C ≥ 2 of the transmission channels (CHi) being allocated to the communications connection,
**characterized**
- **in that** in each case N ≥ 1 consecutive bits (B) are combined to form bit groups (BG),
- **in that** a plurality of bit groups (BG) are allocated to each transmission channel (CHi) in such a way that bit groups that were adjacent before allocation are allocated to different transmission channels after allocation,
- **in that** in each case M ≥ 1 consecutive bits (B) of the bit groups (BG) allocated thereto are combined to form symbols (SY) for each transmission channel (CHi), where M ≥ N,
- **in that** the symbols (SY) are spread by means of the spreading code (SCi) of the respective channel, and
- **in that** the spread symbols (SYS) are transmitted.

2. Method according to Claim 1, having the following further steps:
- for the allocation of the bit groups (BG) to the transmission channels (CHi), the C first consecutive bit groups are allocated to one of the C transmission channels in each case,
- and the preceding method step is repeated with the next following bit groups (BG) in each case until all bit groups are allocated.

3. Method as according to Claim 2, in which, as soon as the available transmission capacity of one of the transmission channels (CHi) is exhausted, the allocation of the as yet unallocated bit groups (BG) to the remaining channels is continued omitting said transmission channel.

4. Method according to one of the preceding claims, in which, following their spreading, the symbols (SY) are simultaneously transmitted in all the transmission channels (CHi) allocated to the connection.

5. Method according to one of the preceding claims, in which the data bits (B) are arranged in an interleaved sequence prior to their combination to form the bit groups (BG).

6. Method according to Claim 5, in which the data bits (B) are subjected to error correction coding (ECC) prior to interleaving.

7. Method according to one of the preceding claims, in which the same number of bits (B) is allocated to each bit group (BG).

8. Method according to one of Claims 1 to 6, in which a different number of bits (B) is allocated to at least two of the bit groups (BG).

9. Method according to Claim 8, in which the spreading codes (SCi) of the channels (CHi) to which the at least two bit groups (BG) are allocated have different spread factors (Q).

10. Method according to Claim 9, in which the spread factors of the spreading codes (SCi) of the channels (CHi) to which the at least two bit groups (BG) are allocated are inversely proportional to one another, like the number of bits (B) allocated to said groups.

11. Application of the method according to one of the preceding claims to a mobile communications system.

12. Transmitting device for transmitting data bits (B), which are allocated to a communications connection and are present in a sequential manner, in a communications system in which transmission channels (CHi) separated using a CDMA method are available, to which channels an individual spreading code (SCi) is allocated in each case,
with C ≥ 2 of the transmission channels (CHi) being allocated to the communications connection,
**characterized**
**in that** the transmitting device comprises the following means:
- means for combination of in each case N ≥ 1 consecutive bits (B) to form bit groups (BG),
- means for allocation of a plurality of the bit groups (BG) to each transmission channel (CHi) such that bit groups that were adjacent before allocation are allocated to different transmission channels after allocation,
- means (MOD) for combination, for each transmission channel (CHi) of in each case M ≥ 1 consecutive bits (B) of the bit groups (BG) allocated thereto to form symbols (SY), where M ≥ N,
- means (SP) for spreading the symbols (SY) by means of the spreading code (SCi) of the respective channel, and
- means (A) for transmitting the spread symbols (SYS) .

## Revendications

1. Procédé pour l'émission de bits de données (B), affectés à une liaison de communication et se présentant séquentiellement, dans un système de communication dans lequel sont disponibles des canaux de transmission (CHi) séparés selon un procédé CDMA, auxquels est respectivement affecté un code d'étalement individuel (SCi),
C ≥ 2 des canaux de transmission (CHi) étant affectés à la liaison de communication,
**caractérisé en ce que**
- respectivement N ≥ 1 successifs des bits (B) sont réunis en groupes de bits (BG);
- à chaque canal de transmission (CHi) sont affectés plusieurs des groupes de bits (BG) de manière telle que des groupes de bits voisins l'un de l'autre avant l'affectation sont affectés à différents des canaux de transmission après l'affectation;
- pour chaque canal de transmission (CHi), respectivement M ≥ 1 successifs des bits (B) des groupes de bits (BG) qui lui sont attribués sont réunis en symboles (SY), avec M ≥ N;
- les symboles (SY) sont étalés avec le code d'étalement (SCi) du canal respectif et
- les symboles étalés (SYS) sont émis.

2. Procédé selon la revendication 1, comprenant les étapes subséquentes suivantes:
- pour l'affectation des g roupes de bits (BG) a ux canaux de transmission (CHi), les C premiers des groupes de bits successifs sont respectivement attribués à l'un des C canaux de transmission et que
- l'étape précédente du procédé est répétée avec les groupes de bits (BG) respectivement suivants jusqu'à ce que tous les groupes de bits aient été répartis.

3. Procédé selon la revendication 2,
dans lequel, dès qu'une capacité de transmission prévue d'un des canaux de transmission (CHi) est épuisée, l'attribution des groupes de bits (BG) non encore répartis jusqu'alors se poursuit sur les autres canaux sans tenir compte de ce canal de transmission.

4. Procédé selon l'une des revendications précédentes,
dans lequel les symboles (SY) sont émis simultanément, après leur étalement, dans tous les canaux de transmission (CHi) affectés à la liaison.

5. Procédé selon l'une des revendications précédentes,
dans lequel les b its de données (B) sont m is dans un o rdre entrelacé avant d'être réunis en groupes de bits (BG).

6. Procédé selon la revendication 5,
dans lequel les bits de données (B) sont soumis à un codage de protection contre les erreurs (ECC) avant l'entrelacement.

7. Procédé selon l'une des revendications précédentes,
**caractérisé en ce que** le même nombre de bits (B) est affecté à chaque groupe de bits (BG).

8. Procédé selon l'une des revendications 1 à 6,
dans lequel un nombre différent de bits (B) est affecté à au moins deux des groupes de bits (BG).

9. Procédé selon la revendication 8,
dans lequel les codes d'étalement (SCi) des canaux (CHi) auxquels sont affectés les au moins deux groupes de bits (BG) ont différents facteurs d'étalement (Q).

10. Procédé selon la revendication 9,
dans lequel les facteurs d'étalement des codes d'étalement (SCi) des canaux (CHi) auxquels sont affectés les au moins deux groupes de bits (BG) sont l'un à l'autre dans le rapport inverse de celui du nombre des bits (B) affectés à ces groupes.

11. Application du procédé selon l'une des revendications précédentes à un système radio mobile.

12. Dispositif d'émission pour émettre des bits de données (B), affectés à une liaison de communication et se présentant séquentiellement, dans un système de communication dans lequel des canaux de transmission (CHi) séparés selon un procédé CDMA sont disponibles, auxquels est respectivement affecté un code d'étalement individuel (SCi),
C ≥ 2 des canaux de transmission (CHi) étant affectés à la liaison de communication,
**caractérisé en ce**
**qu'**il comprend les moyens suivants:
- des moyens pour réunir respectivement N ≥ 1 successifs des bits (B) en groupes de bits (BG);
- des moyens pour affecter à chaque canal de transmission (CHi) plusieurs des groupes de bits (BG) de manière telle que des groupes de bits voisins l'un d e l'autre a vant l'affectation s ont a ffectés à d ifférents des c anaux d e transmission après l'affectation;
- des moyens (MOD) pour réunir en symboles (SY), pour chaque canal de transmission (CHi), respectivement M ≥ 1 successifs des bits (B) des groupes de bits (BG) qui lui sont affectés, avec M ≥ N;
- des moyens (SP) pour étaler les symboles (SY) avec le code d'étalement (SCi) du canal respectif et
- des moyens (A) pour émettre les symboles étalés (SYS).
